# EUROPEAN PATENT SPECIFICATION

(11) **EP 4 212 011 B1**
(45) Date of publication and mention of the grant of the patent: **10.04.2024**
(21) Application number: 23150683.3
(22) Date of filing: 09.01.2023
(51) Int. Cl.: A01G 15/00, B64D 1/18

(54) **AERIAL SPRAY RAINMAKING DEVICE**
REGENERZEUGUNGSVORRICHTUNG MIT LUFTSPRAY
DISPOSITIF DE PLUIE PAR PULVÉRISATION AÉRIENNE

(30) Priority: 10.01.2022 TW 111200297 U
(43) Date of publication of application: 19.07.2023
(73) Proprietor: Chen, Shih-Hsiung, East Dist. Tainan City 701 (TW); Chang Chien, Shu-Hsia, Kaohsiung City 813 (TW)
(72) Inventor: Chen, Shih-Hsiung, East Dist. Tainan City 701 (TW); Chang Chien, Shu-Hsia, Kaohsiung City 813 (TW)
(74) Representative: 2K Patentanwälte Blasberg Kewitz & Reichel

(56) References cited:
- CA-C- 2 306 651
- US-A1- 2021 352 856

## Description

### BACKGROUND

### Technical Field

The disclosure relates to a rainmaking device, particularly to an aerial spray rainmaking device.

### Related Art

Water resource is one of the essential resources for living, and in general, the main water sources are stored in reservoirs after collection from rainwater, and some of the water sources are obtained from desalination of sea water or other methods. With increasing water demand for agricultural, industrial, and domestic use, reduction of water storage capacity of reservoirs due to sediment accumulation over a long period of time, unstable rainfall, or insufficient rainfall due to high-temperature waste gas from industrial plants, water source acquisition becomes more difficult, such that rain making process is required.

The related-art rain making method is to deliver catalyst (moisture absorbing powder, such as sodium chloride and silver iodide) into the atmosphere at high altitude via the method of canon or fireworks to change the cloud property, size, and distribution, thereby generating water drops for rain. However, such type of rain making method is applicable to small scope of area, and the raining area cannot be precisely controlled. Moreover, it also requires additional cost to purchase and use catalyst for the generation of rain. Accordingly, there is a need to increase and control the scope of area of rain making while reducing the use of catalyst at the same time.

US 2021/352856 A1 describes relevant background art.

In view of the above, the inventor seeks to overcome the aforementioned drawbacks associated with the current technology and aims to provide an effective solution through extensive researches along with utilization of academic principles and knowledge.

### SUMMARY

It is an object of the present disclosure to provide a more efficient and economical aerial spray rainmaking device, that is in particular more efficient and economic in use and in particular has an efficient and low-cost configuration.

This and other problems are solved by a aerial spray rainmaking device as claimed in claim 1. Further advantageous embodiments are the subject-matter of the dependent claims.

To accomplish the above object, the disclosure makes widespread clouds in the high-altitude sky be quickly condensed into water droplets to accomplish the function of rainmaking.

To accomplish the above object, the disclosure provides an aerial spray rainmaking device, which includes a container, a water storage assembly, a pump, and a spraying assembly. The water storage assembly is disposed in the container and includes a water tank filled with water. One end of the pump communicates with the water tank. The spraying assembly includes a pressure tank and multiple nozzles communicating with the pressure tank. Another end of the pump communicates with the pressure tank. The water is pressured by the pressure tank and is nebulized and sprayed out of the container by each nozzle.

The disclosure further has the following functions. It is advantageous to be transported and moved by using a container as a carrier, may be easily obtained and have strong structure. The pressure tank and each nozzle may pressure the water, and nebulize and spray the water to increase the contact area with the low-temperature clouds. The insulation cover may slow down the heating speed or cooling speed of the water in the water tank, so as to reduce the heating time or cooling time of the temperature regulator to reduce energy consumption. The heating element of the spraying assembly may be used to secondarily heat up the water in the pressure tank to prevent the hot water from cooling down after passing through the pump and the pressure tank, and to maintain the temperature of the hot water when spraying.

### BRIEF DESCRIPTION OF THE DRAWINGS

FIG. 1 is a cross-sectional view of the disclosure;
FIG. 2 is a schematic view of the application of the disclosure; and
FIG. 3 is a cross-section view of the disclosure in a using status.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

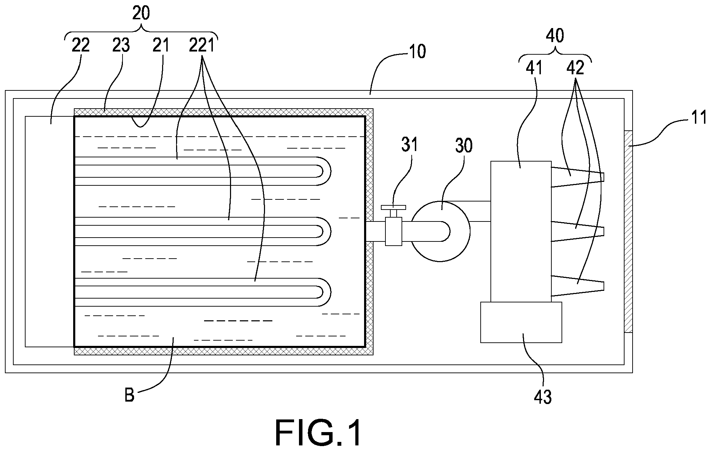

The disclosure provides an aerial spray rainmaking device being carried by an aircraft A, please refer to FIGS. 1-3, which includes a container (such as an intermodal container or a shipping container) 10, a water storage assembly 20, a pump 30 and a spraying assembly 40.

The disclosure does not limit the size and shape of the container 10. The container 10 may be of various sizes on the market or may be adjusted according to different needs, as long as the loading effect is achieved. Therefore, the size and shape of the container 10 should not be used as a limitation of this disclosure. The container 10 has an opening 11, and the opening 11 communicates with the outside of the aircraft A. The purpose of using the container 10 is to facilitate transferring when entering and exiting the aircraft A. Also, the container 10 has the advantages of easy acquisition, firm structure, and convenient transportation.

The water storage assembly 20 is disposed in the container 10 and includes a water tank 21 filled with water B. The water B may be hot water or cold water. In some embodiments, the water storage assembly 20 further includes a temperature regulator 22, which has multiple heat conducting elements 221 disposed in the water tank 21. The temperature regulator 22 uses each heat conducting element 221 to heat up or cool down the water B in the water tank 21. In the embodiment, the temperature regulator 22 may be a heater or a refrigerant compressor, whose functions are described below. When the temperature regulator 22 is a heater, it heats up the water B in the water tank 21 and each heat conducting element 221 is a heating bar. When the temperature regulator 22 is a refrigerant compressor, it cools down the water B in the water tank 21 and each heat conducting element 221 is a condensing tube.

The spraying assembly 40 includes a pressure tank 41 and multiple nozzles 42 communicating with the pressure tank 41. Two ends of the pump 30 separately communicate with the water tank 30 and the pressure tank 41, and the pump 30 has a control valve 31 for controlling the communication between the water tank 21 and pump 30. Therefore, after the water B in the water tank 21 is heated or cooled by the temperature regulator 22, it may be pumped into the pressure tank 41 by the pump 30 to be pressured, and then the water B is nebulized and sprayed out of the container 10 by each nozzle 42.

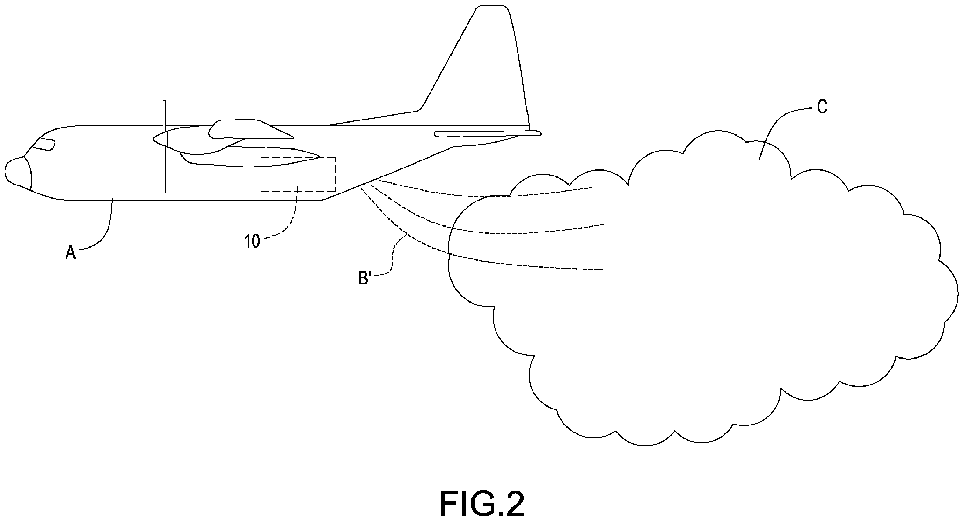

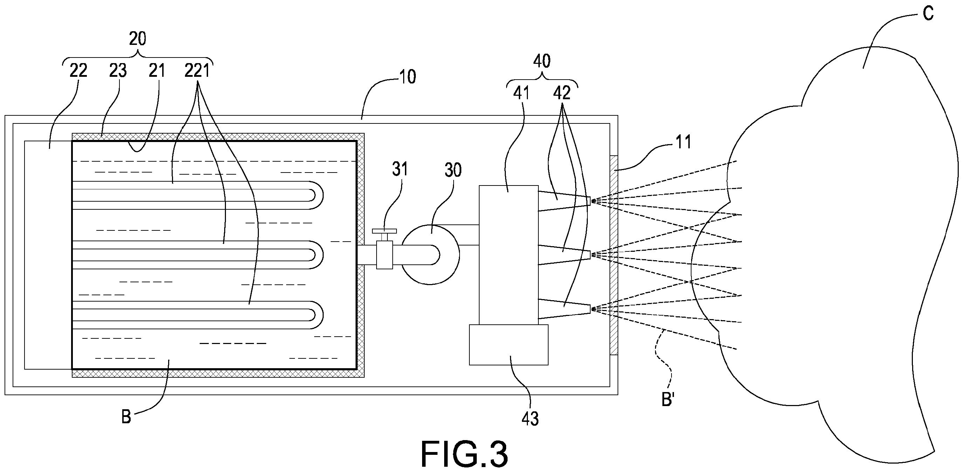

Please refer to FIGS. 2 and 3. In the embodiment, the aircraft A is, but not limited to, a transport plane, any aircraft A capable of accommodating a container is included in the disclosure. The disclosure uses the aircraft A to carry the container 10 to the high-altitude sky where clouds are located, then the water B is sprayed into the high-altitude sky clouds C outside the aircraft A through the opening 11 of the container 10 to form nebulized water B'. The kinetic energy carried by the large-area nebulized water B' and the low-temperature moisture in the high-altitude sky clouds C collide mutually, and they are combined together with respect to the temperature difference to increase volume and weight to form large droplets or tiny ice crystals. The large droplets or ice crystals may attract nearby moisture to increase its own volume and weight to form rainfall when the weight is greater than the buoyancy, and release the latent heat to heat up the surrounding air to make the force of the upward convection become larger so as to form a chain reaction until nearby cumulonimbus becomes raindrops to fall down. In addition, by the flying and spraying of the aircraft A, the spraying range and position of the nebulized water B' may be accurately controlled in large area.

When the temperature is low in winter, the temperature regulator 22 may adopt a heater to heat up the water B in the water tank 21 to a high temperature which is under the boiling point (between, but not limited to, 80°C and 99°C). Therefore, when the high-temperature nebulized water B' is sprayed out of the container 10, it may have a temperature difference with the low-temperature clouds C in the high-altitude sky to obtain the desirable effect of condensation, so as to maximize the rainfall efficiency. When the temperature is high in summer, the temperature regulator 22 may adopt a refrigerant compressor to cool down the water B in the water tank 21 to a low temperature which is above the freezing point (between, but not limited to, 1°C and 20°C). Therefore, when the low-temperature nebulized water B' is sprayed out of the container 10, it may have a temperature difference with the high-temperature clouds C in the high-altitude sky to obtain the desirable effect of condensation, so as to maximize the rainfall efficiency. Also, the spraying assembly 40 further includes a heating element 43. When the temperature regulator 22 adopts a heater, the heating element 43 is used to secondarily heat up the water B in the pressure tank 41 to prevent the water B in the water tank 21, which is heated previously, from cooling down after passing through the pump 30 and the pressure tank 41 to maintain the water B at a high temperature when spraying.

Furthermore, the water storage assembly 20 includes an insulation cover 23 disposed outside the water tank 21 to slow down the cooling speed or heating speed of the water B in the water tank 21 so as to reduce the heating time or cooling time of the temperature regulator 22 to reduce energy consumption.

## Claims

1. An aerial spray rainmaking device comprising:
a container (10);
a water storage assembly (20), disposed in the container (10), comprising a water tank (21) filled with water (B);
a pump (30), one end thereof communicating with the water tank (21); and
a spraying assembly (40), comprising a pressure tank (41) and multiple nozzles (42) communicating with the pressure tank (41), another end of the pump (30) communicating with the pressure tank (41), wherein the pressure tank (41) is configured to pressurize water (B), and the nozzles (42) are configured to nebulize pressurized water (B) and spray pressurized water (B) out of the container (10).

2. The aerial spray rainmaking device of claim 1, wherein the water storage assembly (20) further comprises a temperature regulator (22), the temperature regulator (22) is configured to heat or cool water (B).

3. The aerial spray rainmaking device of claim 2, wherein the temperature regulator (22) is a heater configured to heat up water (B).

4. The aerial spray rainmaking device of claim 3, wherein the spraying assembly (40) further comprises a heating element (43) configured to heat up water (B) in the pressure tank (41).

5. The aerial spray rainmaking device of claim 2, wherein the temperature regulator (22) is a refrigerant compressor configured to cool down water (B).

6. The aerial spray rainmaking device of claim 2, wherein the temperature regulator (22) comprises multiple heat conducting elements (221) disposed in the water tank (21).

7. The aerial spray rainmaking device of claim 6, wherein each heat conducting element (221) is a heating bar or a condensing tube.

8. The aerial spray rainmaking device of claim 1, wherein the water storage assembly (20) further comprises an insulation cover (23) disposed outside the water tank (21).

9. The aerial spray rainmaking device of claim 1, wherein the pump (30) comprises a control valve (31) configured to control communication or closure between the water tank (21) and the pump (30).

10. The aerial spray rainmaking device of claim 1, wherein the container (10) comprises an opening (11), and each nozzle (42) is configured to spray water (B) out of the container (10) through the opening (11).

## Patentansprüche

1. Luftsprüh-Regenerzeugungsvorrichtung, umfassend:
einen Behälter (10);
eine Wasserspeicheranordnung (20), die in dem Behälter (10) angeordnet ist und einen mit Wasser (B) gefüllten Wassertank (21) aufweist;
eine Pumpe (30), von der ein Ende mit dem Wassertank (21) in Verbindung steht; und
eine Sprühanordnung (40), die einen Druckbehälter (41) und mehrere Düsen (42) umfasst, die mit dem Druckbehälter (41) in Verbindung stehen, wobei ein anderes Ende der Pumpe (30) mit dem Druckbehälter (41) in Verbindung steht, wobei der Druckbehälter (41) so konfiguriert ist, dass er Wasser (B) unter Druck setzt, und die Düsen (42) so konfiguriert sind, dass sie unter Druck stehendes Wasser (B) zerstäuben und unter Druck stehendes Wasser (B) aus dem Behälter (10) versprühen.

2. Luftsprüh-Regenerzeugungsvorrichtung nach Anspruch 1, wobei die Wasserspeicheranordnung (20) ferner einen Temperaturregler (22) umfasst, wobei der Temperaturregler (22) so konfiguriert ist, dass Wasser (B) erwärmt oder gekühlt wird.

3. Luftsprüh-Regenerzeugungsvorrichtung nach Anspruch 2, wobei der Temperaturregler (22) eine Heizeinrichtung ist, die so konfiguriert ist, dass diese Wasser (B) erwärmt.

4. Luftsprüh-Regenerzeugungsvorrichtung nach Anspruch 3, wobei die Sprühanordnung (40) ferner ein Heizelement (43) umfasst, das so konfiguriert ist, dass es das Wasser (B) in dem Druckbehälter (41) erwärmt.

5. Luftsprüh-Regenerzeugungsvorrichtung nach Anspruch 2, wobei der Temperaturregler (22) ein Kältemittelkompressor ist, der so konfiguriert ist, dass er Wasser (B) abkühlt.

6. Luftsprüh-Regenerzeugungsvorrichtung nach Anspruch 2, wobei der Temperaturregler (22) mehrere Wärmeleitelemente (221) umfasst, die in dem Wassertank (21) angeordnet sind.

7. Luftsprüh-Regenerzeugungsvorrichtung nach Anspruch 6, wobei jedes Wärmeleitelement (221) ein Heizstab oder ein Kondensationsrohr ist.

8. Luftsprüh-Regenerzeugungsvorrichtung nach Anspruch 1, wobei die Wasserspeicheranordnung (20) ferner eine Isolierabdeckung (23) umfasst, die außerhalb des Wassertanks (21) angeordnet ist.

9. Luftsprüh-Regenerzeugungsvorrichtung nach Anspruch 1, wobei die Pumpe (30) ein Steuerventil (31) umfasst, das so konfiguriert ist, dass es steuert, ob der Wassertank (21) mit der Pumpe (30) in Verbindung steht oder nicht.

10. Luftsprüh-Regenerzeugungsvorrichtung nach Anspruch 1, wobei der Behälter (10) eine Öffnung (11) aufweist und jede Düse (42) so konfiguriert ist, dass sie Wasser (B) durch die Öffnung (11) aus dem Behälter (10) versprüht.

## Revendications

1. Un dispositif de pluie par pulvérisation aérienne comprenant :
un conteneur (10) ;
un ensemble de stockage d'eau (20), disposé dans le conteneur (10), comprenant un réservoir d'eau (21) rempli d'eau (B) ;
une pompe (30) dont l'une des extrémités communique avec le réservoir d'eau (21) ; et
un ensemble de nébulisation (40), comprenant un réservoir sous pression (41) et plusieurs buses (42) communiquant avec le réservoir sous pression (41), une autre extrémité de la pompe (30) communiquant avec le réservoir sous pression (41), dans lequel le réservoir sous pression (41) est configuré pour pressuriser l'eau (B), et les buses (42) sont configurées pour nébuliser l'eau pressurisée (B) et pulvériser l'eau pressurisée (B) à l'extérieur du conteneur (10).

2. Le dispositif de pluie par pulvérisation aérienne selon la revendication 1, dans lequel l'ensemble de stockage d'eau (20) comprend en outre un régulateur de température (22), le régulateur de température (22) est configuré pour chauffer ou refroidir l'eau (B).

3. Le dispositif de pluie par pulvérisation aérienne selon la revendication 2, dans lequel le régulateur de température (22) est un réchauffeur configuré pour chauffer l'eau (B).

4. Le dispositif de pluie par pulvérisation aérienne selon la revendication 3, dans lequel l'ensemble de nébulisation (40) comprend en outre un élément chauffant (43) configuré pour chauffer l'eau (B) dans le réservoir sous pression (41).

5. Le dispositif de pluie par pulvérisation aérienne selon la revendication 2, dans lequel le régulateur de température (22) est un compresseur de réfrigérant configuré pour refroidir l'eau (B).

6. Le dispositif de pluie par pulvérisation aérienne selon la revendication 2, dans lequel le régulateur de température (22) comprend plusieurs éléments conducteurs de chaleur (221) disposés dans le réservoir d'eau (21).

7. Le dispositif de pluie par pulvérisation aérienne selon la revendication 6, dans lequel chaque élément conducteur de chaleur (221) est une barre chauffante ou un tube de condensation.

8. Le dispositif de pluie par pulvérisation aérienne selon la revendication 1, dans lequel l'ensemble de stockage d'eau (20) comprend en outre un couvercle d'isolation (23) disposé à l'extérieur du réservoir d'eau (21).

9. Le dispositif de pluie par pulvérisation aérienne selon la revendication 1, dans lequel la pompe (30) comprend une valve de commande (31) configurée pour contrôler la communication ou la fermeture entre le réservoir d'eau (21) et la pompe (30).

10. Le dispositif de pluie par pulvérisation aérienne selon la revendication 1, dans lequel le conteneur (10) comprend une ouverture (11), et chaque buse (42) est configurée pour pulvériser de l'eau (B) hors du conteneur (10) à travers l'ouverture (11).
